# EUROPÄISCHE PATENTANMELDUNG

(11) **EP 1 640 242 A1**
(43) Veröffentlichungstag der Anmeldung: **29.03.2006**
(21) Anmeldenummer: 05020422.1
(22) Anmeldetag: 20.09.2005
(51) Int. Cl.: B62D 1/184, B62D 1/19

(54) **Lenksäulenanordnung für Fahrzeuge**

(30) Priorität: 23.09.2004 DE 102004046073
(71) Anmelder: DaimlerChrysler AG, 70567 Stuttgart (DE)
(72) Erfinder: Garzke, Martin, Prof. Dr., 07743 Jena (DE); Sass, Carsten, 22303 Hamburg (DE); Sättler, Olaf, 21271 Asendorf (DE); von Glinowiecki, Jörg, 21391 Reppenstedt (DE)

(57) **Zusammenfassung**

Es wird eine Lenksäulenanordnung (1) mit einer längenverstellbaren und/oder neigungsverstellbaren Lenksäule (5) und mit Mitteln zur Lagefixierung der Lenksäule (5) vorgeschlagen. Die Lenksäulenanordnung (1) zeichnet sich dadurch aus, dass die Mittel mindestens eine Kolben-ZylinderEinheit (17) umfassen oder von dieser gebildet sind.

## Beschreibung

Die Erfindung betrifft eine Lenksäulenanordnung mit einer längenverstellbaren und/oder neigungsverstellbaren Lenksäule, gemäß Oberbegriff des Anspruchs 1.

Im modernen Fahrzeugbau sind Lenksäulenfixierungen so ausgebildet, dass sie aus Komfortzwecken in ihrer Länge und gegebenenfalls auch in ihrer Neigung veränderbar sind. Dadurch können sie auf die individuellen Bedürfnisse eines Fahrers eingestellt werden. Zur Fixierung der Lenksäule in ihrer Position sind Klemmmittel vorgesehen. Diese sind so ausgelegt, dass sie die Veränderbarkeit der Lage der Lenksäule zuverlässig und auf Dauer blockieren. Das gilt insbesondere für den Fall, bei dem auf die Lenksäule eine in axialer Richtung wirkende Kraft aufgebracht wird, wie beispielsweise bei einer Kollision des Fahrzeugs. Andererseits müssen die Klemmmittel so ausgelegt sein, dass sie im Bedarfsfall eine Veränderung der Position der Lenksäule einfach zulassen. Eine derartige Lenksäule ist beispielsweise aus der EP 0 802 104 A1 bekannt, die eine fahrzeugfeste Konsole aufweist, an der Klemmmittel in Form von Lamellen gelagert sind. Über diese Klemmmittel steht die Lenksäule mit der Konsole in Verbindung. In einer Öffnungsstellung der Klemmmittel ist es möglich, die Lenksäule gegenüber der Konsole zu verschieben. In einer Schließstellung der Klemmmittel ist die Lenksäule gegenüber der Konsole fixiert. Die bekannte Lenksäulenanordnung weist einen großen Platzbedarf auf.

Es ist Aufgabe der Erfindung, eine Lenksäulenanordnung der eingangs genannten Art zu schaffen, die einen Platz sparenden Aufbau aufweist.

Zur Lösung der Aufgabe wird eine Lenksäulenanordnung mit den Merkmalen des Anspruchs 1 vorgeschlagen. Diese weist eine längenverstellbare und/oder neigungsverstellbare Lenksäule sowie Mittel zur Lagefixierung der Lenksäule auf und zeichnet sich dadurch aus, dass die Mittel mindestens eine Kolben-Zylinder-Einheit umfassen oder von dieser gebildet sind. Damit ist in einfacher Weise ein Platz sparender Aufbau realisierbar. Dadurch wird ferner die Integration der Lagefixierungsmittel in die Lenksäulenanordnung auch bei beengten Platzverhältnissen vereinfacht.

Elektrorheologische und magnetorheologische Flüssigkeiten zeichnen sich dadurch aus, dass die rheologischen Eigenschaften über das elektrische beziehungsweise magnetische Feld steuerbar sind. Bei elektrorheologischen beziehungsweise magnetorheologischen Flüssigkeiten handelt es sich üblicher Weise um Suspensionen, das heißt, um eine Trägerflüssigkeit mit darin suspendierten Festpartikeln, welche über das elektrische/magnetische Feld polarisierbar sind.

Besonders bevorzugt wird ein Ausführungsbeispiel der Lenksäulenanordnung, bei dem die Kolben-Zylinder-Einheit mindestens zwei, mit elektrorheologischer oder magnetorheologischer Flüssigkeit gefüllte, volumenveränderliche Kammern aufweist, wobei die Kammern über mindestens eine Fluidverbindung miteinander in Verbindung stehen und wobei die Fluidverbindung ein elektrorheologisches oder magnetorheologisches Flüssigkeitsventil umfasst. Die Funktionsweise des magnetorheologischen Flüssigkeitsventil besteht darin, dass durch Anlegen eines definierten Magnetfeldes die magnetorheologische Flüssigkeit magnetisiert wird, wodurch das Überströmen dieser Flüssigkeit von einer Kammer in die andere Kammer nur mit hohen hydraulischen Verlusten möglich ist. Diese Verluste stellen ein Widerstand dar, der die zum Bewegen wenigstens eines entsprechend mit der Lenksäule gekoppelten beziehungsweise daran ausgebildeten Kolbens notwendige äußere Kraft massiv erhöht ist. Bei Verwendung einer elektrorheologischen Flüssigkeit weist das der Fluidverbindung zugeordnete Flüssigkeitsventil zur Erzeugung eines definierten elektrischen Feldes beispielsweise eine elektrisch ansteuerbare Spulenanordnung auf.

Weitere vorteilhafte Ausführungsbeispiele der Erfindung ergeben sich aus Kombinationen der in den Unteransprüchen, der Beschreibung sowie der in den Figuren offenbarten Merkmale.

Die Erfindung wird im Folgenden anhand der Zeichnungen näher erläutert. Dabei zeigen:
- Fig. 1: eine perspektivische Darstellung eines Ausführungsbeispiels der erfindungsgemäßen Lenksäulenanordnung;
- Fig. 2: in schematischer Darstellung ein erstes Ausführungsbeispiel einer Kolben-Zylinder-Einheit zur Lagefixierung einer Lenksäule und
- Fig. 3: in schematischer Darstellung ein zweites Ausführungsbeispiel der Kolben-Zylinder-Einheit.

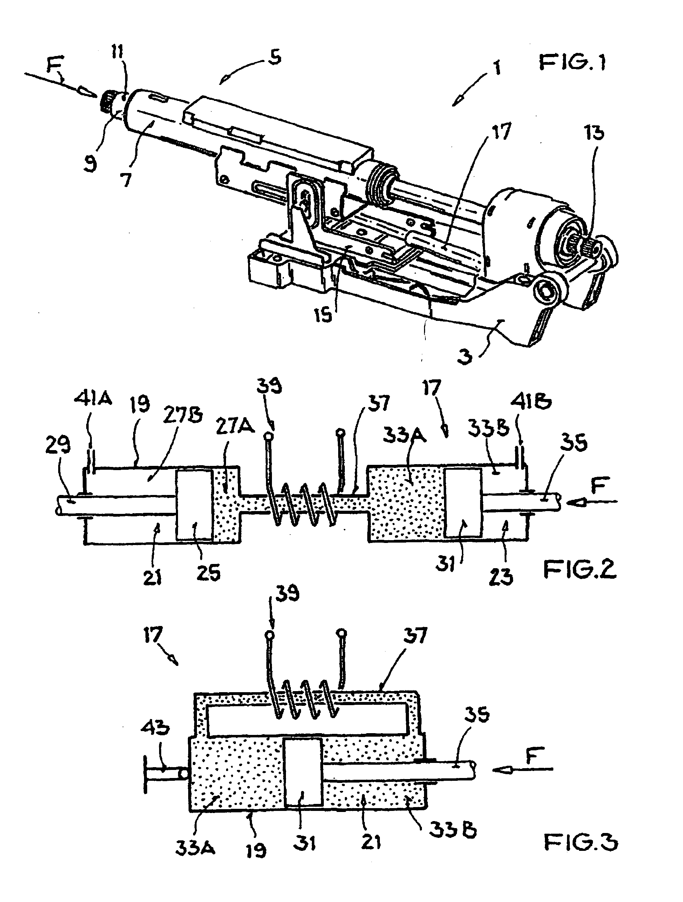

Figur 1 zeigt ein Ausführungsbeispiel einer Lenksäulenanordnung 1 für Fahrzeuge, beispielsweise Kraftfahrzeuge. Die Lenksäulenanordnung 1 weist eine Konsole 3 auf, welche an einem nicht dargestellten Fahrzeugaufbau befestigbar ist. Die Lenksäulenanordnung 1 umfasst weiterhin eine Lenksäule 5 mit einem Mantelrohr 7 sowie eine im Mantelrohr 7 drehbar gelagerte Lenkspindel 9. Die Lenkspindel 9 ist teleskopierbar ausgebildet und weist ein lenkradnahes oberes Spindelteil 11 und ein lenkradfernes unteres Spindelteil 13 auf. Die Lenkspindel 9 dient zur Übertragung von Lenkkräften zwischen einer nicht gezeigten, mit dem oberen Spindelteil 11 verbundenen Lenkhandhabe, beispielsweise einem Lenkrad, und einer ebenfalls nicht gezeigten, mit dem unteren Spindelteil 13 verbundenen Fahrzeuglenkung.

Die Lenksäulenanordnung 1 weist weiterhin einen Konsolenschlitten 15 auf, der an der Konsole 3 verschiebbar gelagert ist. Zum Zwecke der Längenverstellung der Lenksäule 5 wird das Mantelrohr 7 mit dem darin gelagerten oberen Spindelteil 11 mittels einer entsprechenden Relativverschiebung des Konsolenschlittens 15 relativ gegenüber der karosseriefest angeordneten Konsole 3 auf das an der Konsole 3 ortsfest gelagerte untere Spindelteil 3 zu bewegt beziehungsweise von diesem weg bewegt.

Zur Lagefixierung der Lenksäule 5, das heißt der beiden Spindelteile 11 und 13 in einer gewünschten Relativposition zueinander, ist eine Kolben-Zylinder-Einheit 17 vorgesehen, die zwischen der Konsole 3 und dem Mantelrohr 7 angeordnet ist. Der Aufbau und die Funktion der Kolben-Zylinder-Einheit 17 wird nachfolgend anhand der Figur 2 näher erläutert.

Figur 2 zeigt in schematischer Darstellung einen Längsschnitt durch ein erstes Ausführungsbeispiel der Kolben-Zylinder-Einheit 17, die zur Lagefixierung der längenverstellbaren und gegebenenfalls neigungsverstellbaren Lenksäule 5 dient. Die Kolben-Zylinder-Einheit 17 weist ein Gehäuse 19 mit einem ersten Arbeitsraum 21 und einem zweiten Arbeitsraum 23 auf.

Im ersten Arbeitsraum 21 ist ein erster Kolben 25 verschiebbar angeordnet, der den Arbeitsraum 21 in Kammern 27A und 27B unterteilt. Der erste Kolben 25 ist mittels einer Kolbenstange 29 mit der Konsole 3 gekoppelt, wobei die Kopplung dergestalt ist, dass der Kolben 25 innerhalb des Arbeitsraums 21 verschiebbar ist.

Der Arbeitsraum 23 ist mittels eines zweiten Kolbens 31 in Kammern 33A und 33B unterteilt. Der zweite Kolben 31 ist mittels einer Kolbenstange 35 mit dem Mantelrohr 7 oder mit dem Konsolenschlitten 15 in geeigneter Weise verbunden, derart, dass der zweite Kolben 31 innerhalb des Arbeitsraums 23 hin und her verschiebbar ist.

Die Kammern 27A und 33A sind mit einer magnetorheologischen Flüssigkeit gefüllt und stehen über eine Fluidverbindung 37 miteinander in Verbindung. Die Fluidverbindung 37 ist mit einem magnetorheologischen Flüssigkeitsventil 39 versehen, das in der Darstellung gemäß der Figur 2 als Spulenanordnung zur Erzeugung eines Magnetfeldes in der Fluidverbindung 37 angedeutet ist.

Die Kammern 27B und 33B stehen über Öffnungen 41A beziehungsweise 41B mit der Umgebung in Verbindung, das heißt, in den Kammern 27B und 33B herrscht Atmosphärendruck.

Wirkt eine äußere Kraft F auf einen der Kolben 25 und 31, beispielsweise auf den zweiten Kolben 31, wie mit einem Pfeil angedeutet, so strömt die in den Kammern 27A und 33A sowie in der Fluidverbindung 37 befindliche Flüssigkeit -wie bei einem herkömmlichen hydraulischen System auch- verlustarm von der Kammer 33A in die andere Kammer 27A über. Durch Anlegen eines definierten Magnetfeldes, beispielsweise mittels eines Permanentmagneten oder einer elektrischen Spulenanordnung, wird die Flüssigkeit magnetisiert, also das Flüssigkeitsventil 39 aktiviert, wodurch das Überströmen der Flüssigkeit zwischen den Kammern 27A und 33A nur mit sehr hohen hydraulischen Verlusten möglich ist. Diese Verluste stellen ein Widerstand dar, der die zum Bewegen der Kolben 25 und 31 notwendige äußere Kraft massiv erhöht. Durch diese Krafterhöhung ist es möglich, hohe äußere Kräfte, die zum Beispiel bei missbräuchlichen Anwendungen oder Betriebslasten auf die Lenksäule 5 einwirken, aufzunehmen.

Als Alternative zur magnetorheologischen Flüssigkeit kann auch eine elektrorheologische Flüssigkeit verwendet werden, wobei zur Erzeugung eines elektrischen Feldes in der Fluidverbindung 37 zum Zwecke der Polarisierung der darin suspendierten Festkörperteilchen ein elektrorheologisches Flüssigkeitsventil 39 eingesetzt wird. Ein solches Flüssigkeitsventil 39 umfasst beispielsweise eine Elektrodenanordnung, zwischen denen sich die Fluidverbindung 37 befindet und an welche eine elektrische Steuerspannung angelegt wird.

Durch Absenken der Höhe des anliegenden elektrischen/magnetischen Feldes ist eine Verstellung der Lenksäule 5 möglich. Dabei lässt sich gleichzeitig die Betätigungskraft und damit das Verstellkomfortgefühl mit einem Element, nämlich der Kolben-Zylinder-Einheit 17, an unterschiedliche Zielgruppen anpassen. Im aktivierten Zustand des Flüssigkeitsventils 39 wird eine Verstellung der Lenksäule 5 durch die Höhe des anliegenden elektrischen/magnetischen Feldes, zum Beispiel durch Veränderung der elektrischen Spannung, verhindert und somit eine sichere Handhabung der Lenkung gewährleistet.

Bei Einwirkung einer Betätigungskraft beziehungsweise Missbrauchskraft F an der Lenkspindel 9 in Horizontal- oder Vertikalrichtung wird diese Kraft F über das Mantelrohr 7 an die Kolben-Zylinder-Einheit 17 weitergeleitet, wie in Figur 2 mit einem Pfeil angedeutet.

Figur 3 zeigt ein zweites Ausführungsbeispiel der Kolben-Zylinder-Einheit 17. Gleiche Teile sind mit gleichen Bezugszeichen versehen, so dass insofern auf die Beschreibung der vorangegangenen Figuren verwiesen wird. Die Kolben-Zylinder-Einheit 17 weist ein Gehäuse 19 mit lediglich einem Arbeitsraum 21 auf, der mittels des Kolbens 31 in volumenveränderliche Kammern 33A und 33B unterteilt ist. Die Kammern 33A und 33B sind über eine von einer Bypassleitung gebildeten Fluidverbindung 37 strömungstechnisch miteinander verbunden. Die Kammern 33A und 33B sowie die Fluidverbindung 37 sind mit der magnetorheologischen Flüssigkeit gefüllt. Das Gehäuse 19 ist über ein Koppelelement 43 mit der Konsole 3 und der Kolben 31 über die Kolbenstange 35 mit dem Mantelrohr 7 beziehungsweise dem Konsolenschlitten 15 gekoppelt.

Die Funktionsweise der in Figur 3 dargestellten Kolben-Zylinder-Einheit 17 entspricht hinsichtlich der Nutzung des physikalischen Effekts der magnetorheologischen beziehungsweise elektrorheologischen Flüssigkeit der Funktion der anhand Figur 2 beschriebenen Kolben-Zylinder-Einheit 17, jedoch ist der Aufbau der in Figur 3 dargestellten Kolben-Zylinder-Einheit 17 weiter vereinfacht.

Die erfindungsgemäße Kolben-Zylinder-Einheit 17 kann zusätzlich zu ihrer Funktion "Lagefixierung/Klemmung" der Lenksäule 5 auch als Energieabsorptionselement bei Krafteinwirkung auf die Lenksäule 5 dienen. Wenn im Falle eines Crashs eine Kraft F auf die Lenksäulenanordnung 1 einwirkt und diese Kraft F ein vorbestimmtes Maß überschreitet, so wird die Kraft F über die Lenksäule 5 und das Mantelrohr 7 beziehungsweise den Konsolenschlitten 15 in die Kolben-Zylinder-Einheit 17 eingeleitet. Dabei ist die Kolben-Zylinder-Einheit 17 so ausgelegt, dass sie einem vorbestimmten Kraftmaß standhält, das heißt, die Lenksäule 5 wird trotz dieser Kraft F in ihrer Position gehalten. Überschreitet die Kraft F nun ein vorbestimmtes Maß, kann durch definierte Absenkung der Höhe des magnetischen/elektrischen Feldes des Flüssigkeitsventils 39 der hydraulische Widerstand in gewünschter Weise reduziert werden, was eine Relativbewegung zwischen dem Konsolenschlitten 15 und der Konsole 3 zur Folge hat. Dadurch kann in Abhängigkeit verschiedener Parameter, beispielsweise Insassenparameter, wie zum Beispiel der Sitzposition, der Größe des Insassen, des Gewichtes des Insassen, der Gurtbenutzung und/oder der Unfallschwere, eine optimale Dämpfungscharakteristik eingestellt werden.

Zusammenfassend bleibt festzuhalten, dass die erfindungsgemäße Lenksäulenanordnung 1 sich von den bekannten Lenksäulenanordnungen insbesondere dadurch unterscheidet, dass die Mittel zur Lagefixierung der verstellbaren Lenksäule 5 nicht mechanisch wirkend sind, sondern sich durch Nutzung einer in ihrer Höhe definiert einstellbaren Flüssigkeitsreibung auszeichnen.

## Patentansprüche

1. Lenksäulenanordnung (1) mit einer längenverstellbaren und/oder neigungsverstellbaren Lenksäule (5) und mit Mitteln zur Lagefixierung der Lenksäule (5),
**dadurch gekennzeichnet,**
**dass** die Mittel mindestens eine Kolben-Zylinder-Einheit (17) umfassen oder von dieser gebildet sind.

2. Lenksäulenanordnung nach Anspruch 1,
**dadurch gekennzeichnet,**
**dass** die Kolben-Zylinder-Einheit (17) mindestens zwei, mit elektrorheologischer oder magnetorheologischer Flüssigkeit gefüllte, volumenveränderliche Kammern (33A, 27A) aufweist, wobei die Kammern (33A, 27A) über mindestens eine Fluidverbindung (37) miteinander in Verbindung stehen, und wobei die Fluidverbindung (37) ein elektrorheologisches oder magnetorheologisches Flüssigkeitsventil (39) umfasst.

3. Lenksäulenanordnung nach Anspruch 2,
**dadurch gekennzeichnet,**
**dass** die Kolben-Zylinder-Einheit (17) mindestens einen Arbeitsraum (21) aufweist, der mittels eines Kolbens (31) in die volumenveränderlichen Kammern (33A, 33B) unterteilt ist.

4. Lenksäulenanordnung nach Anspruch 2,
**dadurch gekennzeichnet,**
**dass** die Kolben-Zylinder-Einheit (17) zwei Arbeitsräume (21, 23) aufweist, in denen jeweils ein verschiebbarer Kolben (25, 31) angeordnet ist, wobei in jedem der Arbeitsräume (21, 23) jeweils eine der mit elektrorheologischer oder magnetorheologischer Flüssigkeit gefüllten, volumenveränderlichen Kammern (33A, 27A) vorgesehen ist.

5. Lenksäulenanordnung nach einem der Ansprüche 1 bis 4,
**dadurch gekennzeichnet,**
**dass** die Kolben-Zylinder-Einheit (17) zudem als Energieabsorptionselement bei Krafteinwirkung auf die Lenksäule (5) dient.

6. Lenksäulenanordnung nach einem der Ansprüche 1 bis 5,
**dadurch gekennzeichnet,**
**dass** die Kolben-Zylinder-Einheit (17) an einem Ende mit einer karosseriefest angeordneten Konsole (3) und am anderen Ende mit einem Mantelrohr (7) oder einem verschiebbar an der Konsole (3) gelagerten Konsolenschlitten (15) gekoppelt ist.

7. Lenksäulenanordnung nach einem der Ansprüche 1 bis 6,
**dadurch gekennzeichnet,**
**dass** die als Lagefixier- und Feststelleinrichtung dienende Kolben-Zylinder-Einheit (17) als kompakte Baueinheit ausgebildet ist.
